# EUROPÄISCHE PATENTSCHRIFT

(11) **EP 2 809 492 B1**
(45) Veröffentlichungstag und Bekanntmachung des Hinweises auf die Patenterteilung: **06.04.2016**
(21) Anmeldenummer: 13701485.8
(22) Anmeldetag: 30.01.2013
(51) Int. Cl.: B29C 44/32, B29C 44/46, B32B 5/20, B32B 15/14, B32B 7/04, E04C 2/20, B29K 75/00, B32B 17/06, B32B 27/12

(54) **VERFAHREN ZUR KONTINUIERLICHEN HERSTELLUNG EINES SANDWICH-VERBUNDELEMENTES**
METHOD FOR CONTINUOUS PRODUCTION OF A SANDWICH COMPOUND ELEMENT
PROCÉDÉ DE FABRICATION CONTINUE D'UN ÉLÉMENT COMPOSITE EN SANDWICH

(30) Priorität: 02.02.2012 EP 12153613
(43) Veröffentlichungstag der Anmeldung: 10.12.2014
(73) Patentinhaber: Covestro Deutschland AG, 51373 Leverkusen (DE)
(72) Erfinder: ROERS, Rolf, 51519 Odenthal (DE); SCHINDLER, Walter, 51399 Burscheid (DE); KELLERHOF, Ingo, 53819 Neunkirchen-Seelscheid (DE)
(74) Vertreter: Levpat
(86) Internationale Anmeldenummer: PCT/EP2013/051751
(87) Internationale Veröffentlichungsnummer: WO 2013/113734

(56) Entgegenhaltungen:
- EP-A1- 1 518 654
- EP-A2- 0 728 574
- US-A- 5 089 189

## Beschreibung

Die Erfindung betrifft ein kontinuierliches Verfahren zur Herstellung von Sandwich-Verbundelementen umfassend eine Unterdeckschicht, eine Oberdeckschicht und einen zwischen den Deckschichten angeordneten Polyurethan-Hartschaumkernkörper.

### STAND DER TECHNIK

Sandwich-Verbundelemente mit zwei Deckschichten und einem dazwischen liegenden Kernkörper aus einem Hartschaumstoff sehen sich einer Vielzahl von Anforderungen ausgesetzt, insbesondere steigenden Anforderungen bezüglich einer Feuerwiderstandsfähigkeit bei niedrigen Dichten des Polyurethan-Hartschaumkernkörpers, optimiertem Rauchverhalten sowie einer effizienten Wärmeisolation. Darüber hinaus verlangt der Markt steigende Produktivitäten bei der Herstellung solcher Sandwich-Verbundelemente bei gleichzeitig hoher Oberflächengüte der Deckschichtaußenseiten.

Die EP 0 727 550 A1 offenbart Sandwich-Verbundelemente mit einem Kernkörper aus einer Polyurethanschaumplatte und zwei metallischen Deckschichten, wobei zusätzlich eine mineralische Isolierungsschicht enthaltend Magnesiumoxychlorid zwischen der Kernschicht und den metallischen Deckschichten angeordnet ist.

Aus der EP 0 891 860 A2 sind Sandwich-Verbundelemente mit einem Kernkörper aus Hartschaumstoff und zwei metallischen Deckschichten bekannt, wobei vorgeschlagen wird, zwischen dem Kernmaterial und den Deckschichten eine Matte aus intumeszierendem Material von mindestens 20 Massen-% anzuordnen, welche Matte zumindest anteilig aus Graphit besteht. Die Matte ist perforiert, um durch die Löcher der Perforation eine Verbindung zwischen dem Hartschaumkern und den Metalldeckplatten zu ermöglichen. Zu diesem Zweck wird der Einsatz von flüssigen Polyurethan-Klebstoffen angegeben.

Die EP 2 095 926 A1 offenbart Dämmstoffe aus einer Isolierschicht aus synthetischem Schaumstoff und einer Intumeszenzschicht aus Polyurethanschaumstoff auf Basis von phosphorhaltigen Polyolen.

Die WO 2005/095 728 A1 befasst sich mit Wärmedämmverbünden mit verbesserter Thermostabilität und einem verbesserten Brandverhalten. Offenbart werden Sandwich-Verbundelemente, bei denen sich zwischen der Kernschicht und mindestens einer der Metalldeckplatten eine Brandschutzschicht befindet. Als geeignete Materialien für die Brandschutzschicht werden Alkalisilikate, insbesondere wasserhaltiges Natriumsilikat, Blähgraphit und Blähglimmer offenbart. Zur Verbindung der Bestandteile des Verbundelements sind Klebstoffe erforderlich.

Die JP 2005 163 481 A befasst sich mit der Verbesserung der Feuerbeständigkeit und der thermischen Isolationswirkung von Sandwich-Verbundelementen. Hierzu wird der Einsatz einer zusätzlichen anorganischen Schicht im Verbundelement vorgeschlagen. Als geeignete anorganische Schichten werden Calciumsilikat-Platten, Mineralwoll-Platten und GipskartonPlatten genannt.

Die JP 2008 261 196 A befasst sich ebenfalls mit der Verbesserung der Feuerbeständigkeit und der thermischen Isolationswirkung von Sandwich- Verbundelementen. Die Verbundelemente umfassen eine Kernschicht aus Polyurethan, Mineralwolle, Glaswolle oder Kohlenstofffasern sowie Deckschichten aus Stahl oder einem anorganischen Material. Zusätzlich wird ein Imprägnierungsschritt der Oberfläche der Kernschicht mit einem wasserlöslichen feuerbeständigen Material wie einem Silikat vorgeschlagen.

Aus der WO 2008/113751 A1 ist ein diskontinuierliches Verfahren zur Herstellung von Sandwich- Verbundelementen aus Polyurethan bekannt, bei dem eine Kernschicht und eine Verstärkungsfaserschicht vorgelegt werden und auf die Verstärkungsfaserschicht eine Polyurethanreaktionsmischung aufgetragen wird und das so erhaltene Teil in einer Form aushärtet. Dabei wird eine Polyurethanreaktionsmischung eingesetzt, die einen Reaktivkettenverlängerer mit zumindest zwei gegenüber Isocyanaten reaktiven Gruppen umfasst, von denen zumindest eine Gruppe eine NH₂-Gruppe ist. Bevorzugte Kernschichten sind thermoformbare Polyurethan-Schaumstoffe sowie Papier-, Metall- oder Kunststoffwaben. Als mögliche Verstärkungsfaserschichten werden Glasfasermatten, Glasfaservliese, Glasfaserwirrlagen, Glasfasergewebe, geschnittene oder gemahlene Glas- oder Mineralfasern, Naturfasermatten und -gewirke, geschnittene Naturfasern und Fasermatten, -vliese und -gewirke auf Basis von Polymer-, Kohlenstoff- bzw. Aramidfasern sowie deren Mischungen offenbart.

In der DE 195 06 255 A1 sind Sandwich- Verbundelemente mit Deckschichten aus massivem Polyurethan und Polyurethanschaumschichten als Kernkörper beschrieben, wobei mindestens die massiven Polyurethanschichten 15 bis 55 Gew.-% Glimmer enthalten, um beispielsweise Sanitärerzeugnisse vorteilhaft herzustellen. Dabei wird angegeben, dass der Einsatz von Glimmer in der Polyurethanreaktivmischung anstelle des Einsatzes von gemahlenen Glasfasern eine um 25% reduzierte Temperaturanstiegsrate zu Beginn der Reaktion bewirkt. Die Sandwich-Verbundelemente bestehen bevorzugt aus 3 bis 5 Schichten, wobei sich Massiv- und Schaumstoffschichten abwechseln, und diese werden durch einen schichtweisen Auftrag, vorzugsweise durch Sprühen, auf ein Substrat erzeugt. Ferner ist der Einsatz von Glasfaser-Strands oder Glasfasergewebe als Verstärkungselemente und/oder Verankerungselemente offenbart, wobei die Glasfaser-Strands oder Glasfasergewebe auf eine noch nicht ausreagierte Lage aufgelegt und durch den nachfolgenden Auftrag einer weiteren Lage in das Sandwich-Verbundelement eingeschlossen werden. Die Sandwich- Verbundelemente können nur diskontinuierlich auf Substraten erzeugt werden, die lediglich der Formgebung dienen und nach dem Aushärten entfernt werden, welches Verfahren kontinuierlich folglich nicht möglich ist. Da die Glasfaser-Strands oder Glasfasergewebe zwischen mehreren Lagen von Polyurethanschichten angeordnet werden, bewirken diese lediglich eine positive Beeinflussung der mechanischen Eigenschaften der Sandwich-Struktur, eine Verbesserung der Brandschutzeigenschaften wird jedoch nicht erzielt.

Aus der US 5 089 189 ist ein Verfahren zur kontinuierlichen Herstellung von Sandwich-Verbundelementen bekannt, wobei wenigstens eine Lage Glaslaserstränge vorgesehen wird.

Angesichts der stetig steigenden Anforderungen an Sandwich-Verbundelemente bezüglich ihrer Feuerwiderstandsfähigkeit, eines optimierten Rauchverhaltens, einer effizienten Wärmeisolation und einer hohen Oberflächengüte der Deckschichten ergibt sich der Bedarf nach einer verbesserten und unter Berücksichtigung der vorgenannten Eigenschaften wirtschaftlichen Herstellung. Um jedoch eine hohe Produktivität zur Herstellung von Sandwich-Verbundelementen zu schaffen, die zugleich ein vorteilhaftes Brandverhalten aufweisen, sind die aus dem genannten Stand der Technik aufgezeigten meist diskontinuierlichen Verfahren nicht geeignet.

### OFFENBARUNG DER ERFINDUNG

Es ist daher die Aufgabe der vorliegenden Erfindung, ein Verfahren zur kontinuierlichen Herstellung von Sandwich-Verbundelementen mit einer hohen Produktivität zu schaffen, welche Sandwich-Verbundelemente ein vorteilhaftes Brandschutzverhalten aufweisen.

Diese Aufgabe wird ausgehend von einem Verfahren zur kontinuierlichen Herstellung von Sandwich-Verbundelementen gemäß den bekannten Merkmalen des Anspruchs 1 und gemäß den bekannten Merkmalen des Anspruchs 11 in Verbindung mit den jeweils kennzeichnenden Merkmalen gelöst. Vorteilhafte Weiterbildungen der Erfindung sind in den jeweils abhängigen Ansprüchen angegeben.

Zur Lösung der Aufgabe sieht die Erfindung ein Verfahren zur kontinuierlichen Herstellung von Sandwich-Verbundelementen mit einer Unterdeckschicht, einer Oberdeckschicht und einem zwischen den Deckschichten eingebrachten Polyurethan- Hartschaumkernkörper vor, wobei eine Doppelband-Transportanlage mit einem Untertransportband und mit einem Obertransportband vorgesehen ist und wobei die Unterdeckschicht und die Oberdeckschicht zwischen die Transportbänder kontinuierlich einlaufen. Dabei läuft weiterhin wenigstens eine Glasfasermatte kontinuierlich zwischen die Deckschichten ein und wird angrenzend an die Innenseite wenigstens einer der Deckschichten angeordnet und wobei auf wenigstens eine Innenseite der Deckschichten und/oder auf die Glasfasermatte ein anschließend aufschäumendes Reaktionsgemisch zur Bildung des Polyurethan- Hartschaumkernkörpers aufgebracht wird.

Die Erfindung nutzt die positiven Eigenschaften einer Glasfasermatte zur Verbesserung des Brandschutzverhaltens von Sandwich-Verbundelementen. Zugleich wird ein vorteilhaftes Verfahren zur Herstellung der Sandwich-Verbundelemente mittels einer Doppelband-Transportanlage genutzt. Die verbesserten Brandschutzeigenschaften der Sandwich-Verbundelemente werden insbesondere dadurch erzielt, dass die Glasfasermatte an die Innenseite entweder der Unterdeckschicht und/oder der Oberdeckschicht angeordnet wird. In SBI-Brandtests konnte festgestellt werden, dass die Rauchentwicklung bei Anordnung einer Glasfasermatte auf wenigstens einer Innenseite der Deckschichten deutlich reduziert werden kann, und der TSP₆₀₀-Test (Total Smoke Production) weist einen Wert von nur noch etwa 100/m² auf (SBI-Test nach DIN EN 13823 sowie Feuerwiderstandstest nach DIN 1364 1 und 2). Der Grund liegt im Schmelzverhalten einer Glasfasermatte bei Hitzeeinwirkung, wodurch eine Vernetzung des faserartigen Glasmaterials erzeugt wird, und das Material des Polyurethan-Hartschaumkernkörpers wird vor direkter Flammeneinwirkung abgeschirmt, da durch die schmelzzähe Glasmasse ein Schutz des Hartschaumkernkörpers erzeugt wird. Insbesondere konnte festgestellt werden, dass eine Rissbildung im Hartschaumkernkörper verhindert oder wenigstens verzögert wird, so dass ein Durchbrand eines Sandwich-Verbundelementes mit einer erfindungsgemäß eingebrachten Glasfasermatte bei einer kontinuierlichen Beflammung verhindert oder wenigstens stark verzögert wird

Im Folgenden werden verschiedene vorteilhafte Möglichkeiten zur Weiterbildung des Verfahrens und insbesondere zur Anordnung der Glasfasermatte an wenigstens einer Innenseite der Deckschichten aufgezeigt.

Nach einem ersten möglichen Ausführungsbeispiel kann das aufschäumende Reaktionsgemisch zur Bildung des Polyurethan-Hartschaumkernkörpers auf die Innenseite der Unterdeckschicht vorzugsweise mittels wenigstens einer Gießharke aufgebracht werden. Die Verwendung einer Gießharke ist dabei lediglich beispielhaft genannt und das aufschäumende Reaktionsgemisch kann auch mit anderen Verfahren aufgebracht werden, beispielsweise über einen Mischkopf, einen sich an den Mischkopf fluidisch anschließenden Verteilerkopf und eine Anzahl von an den Verteilerkopf angeordnete Schläuche, aus denen das Reaktionsgemisch austreten und insbesondere in zueinander gleichen Abständen auf die Deckschicht gelangen kann. Ebenfalls können quer zur Produktionsrichtung oszillierende Gießharken oder stehende Gießharken eingesetzt werden.

Zugleich kann eine Glasfasermatte angrenzend an die Innenseite der gegenüberliegenden Oberdeckschicht zwischen die Deckschichten geführt werden. Schäumt das Reaktionsgemisch beginnend von der Unterdeckschicht auf, so kann die Glasfasermatte durch das im Aufsteigen begriffene aufschäumende Reaktionsgemisch gegen die Innenseite der Oberdeckschicht gedrückt und durch das Reaktionsgemisch durchtränkt werden. Die Glasfasermatte kann durch aufschäumende Reaktionsgemisch somit gegen die Innenseite der Oberdeckschicht verklebt werden. Gleichzeitig und/oder anschließend härtet das aufschäumende Reaktionsgemisch zum Polyurethan-Hartschaumkernkörper aus. Die Aushärtung erfolgt dabei noch während des Durchlaufes durch die Doppelband-Transportanlage. Diese erfüllt einerseits die Funktion des Transportes der Deckschichten und der Glasfasermatte, indem diese zwischen die Transportbänder eingezogen werden, weiterhin definiert der Abstand der Transportbänder die Dicke der Sandwich-Verbundelemente, die die Doppelband-Transportanlage in einem kontinuierlichen Strang verlassen und anschließend durch eine Vereinzelungsanlage in einzelne Elemente geschnitten werden können. Die Glasfasermatte läuft vorzugsweise mit der gleichen Geschwindigkeit wie auch die Unterdeckschicht und die Oberdeckschicht in die Transportbänder ein. Insbesondere erfolgt der Einzug der Glasfasermatte durch den fortlaufenden Einzug der Deckschichten und durch die Verbindung mit dem aufschäumenden und aushärtenden Reaktionsgemisch.

Nach einer weiteren möglichen Ausführungsform zur Bildung der erfindungsgemäßen Sandwich-Verbundelemente kann die Glasfasermatte alternativ oder eine weitere Glasfasermatte zusätzlich zur Glasfasermatte auf der Innenseite der Oberdeckschicht angrenzend an die Innenseite der Unterdeckschicht zwischen die Deckschichten geführt werden. Dabei wird das aufschäumende Reaktionsgemisch nicht mehr auf die Innenseite der Unterdeckschicht direkt aufgetragen werden, und das sich noch im flüssigen Zustand befindende aufschäumende Reaktionsgemisch kann durch die Gießharke zunächst auf die Glasfasermatte aufgetragen werden, und das Reaktionsgemisch kann anschließend aufschäumen, wodurch die Glasfasermatte auch gegen die Unterdeckschicht gedrückt wird und mit dieser verklebt. Folglich können mit dem erfindungsgemäßem Verfahren Sandwich-Verbundelemente hergestellt werden, die entweder nur auf der Innenseite der Oberdeckschicht, nur auf der Innenseite der Unterdeckschicht oder auf der Innenseite der Unterdeckschicht und auf der Innenseite der Unterdeckschicht jeweils eine Glasfasermatte aufweisen.

Die Glasfasermatte muss bestimmte Kriterien erfüllen, um zu vermeiden, dass sich die Glasfasermatte von der Innenseite der Deckschicht löst, und es muss insbesondere vermieden werden, dass das aufschäumende Reaktionsgemisch die Glasfasermatte lediglich durchtränkt, ohne diese gegen die Innenseite der Deckschicht zu drücken. Idealerweise ist die Glasfasermatte nach Beendigung der Aufschäumbewegung des Reaktionsgemisches so nah wie möglich an der Innenseite der Deckschicht angeordnet und vollständig vom Reaktionsgemisch umflossen bzw. durchtränkt. Beispielsweise kann die Glasfasermatte eine gegebene Mattendicke aufweisen, und der resultierende Abstand der Glasfasermatte zur Innenseite der Deckschicht kann vorzugsweise maximal mit der Mattendicke und besonders bevorzugt maximal mit der halben Mattendicke der Deckschicht gebildet sein. Als Glasfasermatte können allgemein Endlos-Glasfaser-Flächengebilde verwendet werden, und es hat sich mit Vorteil herausgestellt, als Glasfasermatten Glasflamentgewebe, Glasfaservlies, Textilglasfasermatten, Textilglas-Sandwichmatten und/oder gewebeverstärkte Glasmatten zu verwenden. Die Glasfasermatten können insbesondere ein Flächengewicht von 100 bis 800 g/m², bevorzugt von 150 g/m² bis 300 g/m², vorzugsweise 200 g/m² bis 250 g/m² und besonders bevorzugt von 225 g/m² aufweisen. Glasfasermatten mit derartigen Spezifikationen verhalten sich gegenüber dem aufschäumenden Reaktionsgemisch als eine Art Schaumbarriere, wobei das Material der Glasfasermatte dennoch vom aufschäumenden Reaktionsgemisch durchtränkt wird, um ein Verkleben des Polyurethan-Hartschaumkernkörpers mit der Innenseite der Deckschicht zur ermöglichen.

Auch ist es vorteilhaft, Glasfasermatten zu verwenden, die einen Erweichungspunkt und/oder einen Schmelzpunkt von wenigstens 800°C und vorzugsweise von wenigstens 1000°C aufweisen. Damit können die Glasfasermatten derart beschaffen sein, dass bei einer Wärmeeinwirkung die Glasfasermatten keine Brandlochbildungen aufweisen, und das Glasmaterial bildet eine flächige Schutzbarriere gegen eine Beflammung von der Außenseite. Folglich wird der Polyurethan-Hartschaumkernkörper auch bei stärkerer Hitzeeinwirkung nicht direkt der Beflammung ausgesetzt.

Nach einer weiteren vorteilhaften Ausführungsform kann die Glasfasermatte von einer Materialrolle abgewickelt und unter Vorspannung in Endlosrichtung zwischen die Deckschichten geführt werden. Durch die Vorspannung kann erreicht werden, dass die Glasfasermatte an der Innenseite der Unterdeckschicht oder an der Innenseite der Oberdeckschicht anliegt, und die Anlage der Glasfasermatte gegen die jeweilige Innenseite kann insbesondere bereits vor Kontakt der Glasfasermatte mit dem aufschäumenden Reaktionsgemisch sichergestellt sein.

Sandwich-Verbundelemente weisen dann ein besonders vorteilhaftes Brandschutzverhalten auf, wenn die Deckschichten aus einer Metallmaterialbahn bereitgestellt werden, insbesondere aus einem Metallmaterial aus der Gruppe der Stähle, der Edelstähle oder aus einem Aluminiummaterial oder es kann vorgesehen sein, dass die Deckschichten aus einer Kunststoffmaterialbahn, insbesondere mit einer Beschichtung, bereitgestellt werden, wobei das Kunststoffmaterial ebenfalls derart ausgewählt werden kann, dass dieses eine besonders hohe Schutzwirkung bei einer Beflammung aufweist.

Ein weiterer Vorteil wird erreicht, wenn die Transportgeschwindigkeit der Doppelband-Transportanlage mit einem Wert gewählt wird, bei dem die Glasfasermatte während des Durchlaufens zwischen den Transportbändern an der Deckschicht verklebt. Das Verkleben der Glasfasermatte an der Innenseite der Deckschicht sollte ebenso wie das Aushärten des aufschäumenden Reaktionsgemisches zum Polyurethan-Hartschaumkernkörper noch zu einem Zeitpunkt erfolgen, in dem sich die Deckschichten noch zwischen den Transportbändern der Doppelband-Transportanlage befinden. Nur so kann der gewünschte Schichtaufbau im entsprechenden Verbund und die gewünschte Dicke des Verbundelementes sichergestellt werden.

Das aufschäumende Reaktionsgemisch kann wenigstens mit den zusammengeführten Mischkomponenten Isocyanat und Polyol gebildet sein, wobei der Polyurethan-Hartschaumkernkörper ein PUR- oder ein PIR-Hartschaummaterial umfasst und wobei dem Reaktionsgemisch Flammschutzmittel, insbesondere brom- und chlorhaltige Polyole oder Phosphorverbindungen wie Ester der Orthophosphorsäure und der Metaphosphorsäure, insbesondere enthaltend Halogen, zugesetzt sein können.

Das aufschäumende Reaktionsgemisch kann wenigstens aus den Komponenten Polyol und Isocyanat gebildet sein. Als dem aufschäumenden Reaktionsgemisch aus der Isocyanatkomponente und der Polyolkomponente zugesetzte Treibmittel können Kohlenwasserstoffe, z. B. die Isomeren des Pentans oder Fluorkohlenwasserstoffe, z.B. HFC 245fa (1,1,1,3,3-Pentafluorpropan), HFC 365mfc (1,1,1,3,3-Penta-fluorbutan) oder deren Mischungen mit HFC 227ea (Heptafluorpropan), verwendet werden. Es können auch verschiedene Treibmittelklassen kombiniert werden. Als dem aufschäumenden Reaktionsgemisch aus der Isocyanat- und der Polyolkomponente zugesetzte Co-Treibmittel können Wasser und/oder Ameisensäure oder andere organische Carbonsäuren eingesetzt werden.

Dem aufschäumenden PUR-PIR-Reaktionsgemisch können Flammschutzmittel, bevorzugt in einer Menge von 5 bis 35 Massen-% bezogen auf die Gesamtmasse an Verbindungen mit gegenüber Isocyanatgruppen reaktiven Wasserstoffatomen in der Polyolkomponente zugesetzt sein. Die Flammschutzmittel können beispielsweise brom- und chlorhaltige Polyole oder Phosphorverbindungen wie die Ester der Orthophosphorsäure und der Metaphosphorsäure sein, die ebenfalls Halogen enthalten können. Bevorzugt können bei Raumtemperatur flüssige Flammschutzmittel gewählt werden.

Dem aufschäumenden Reaktionsgemisch aus der Isocyanat- und der Polyolkomponente können Katalysatoren zugesetzt sein. Beispiele für Katalysatoren können sein: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriaz.in, Tetramethylammoniumhydroxid, Natriumacetat, Natriumoctoat, Kaliumacetat, Kaliumoctoat, Natriumhydroxid oder Gemische dieser Katalysatoren.

Dem aufschäumenden Reaktionsgemisch aus der Isocyanat- und der Polyolkomponente können ferner Schaumstabilisatoren zugesetzt werden, bevorzugt Polyethersiloxane. Diese Verbindungen können so aufgebaut sein, dass ein Copolymerisat aus Ethylenoxid und Propylenoxid mit einem Polydimethylsiloxanrest verbunden ist.

Ein Zusatz von Hilfs- und Zusatzstoffen, Katalysatoren und dergleichen zum aufschäumenden Reaktionsgemisch kann vor oder während der Vermischung der Polyol- und IsocyanatKomponenten zugeführt werden.

Die Aufgabe der vorliegenden Erfindung wird ferner gelöst durch ein Sandwich-Verbundelement, das mit einem Verfahren der vorbeschriebenen Art hergestellt wird und eine Unterdeckschicht, eine Oberdeckschicht und einen zwischen den Deckschichten eingebrachten Polyurethan-Hartschaumkernkörper aufweist, wobei angrenzend an wenigstens eine Innenseite der Deckschichten eine Glasfasermatte angeordnet ist.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine schematische Ansicht einer Anlage zum Betrieb eines Verfahrens zur Herstellung eines Sandwich- Verbundelementes gemäß einem ersten Ausführungsbeispiel der vorliegenden Erfindung, bei dem eine Glasfasermatte an der Innenseite der Oberdeckschicht angeordnet wird,
- Figur 2: das Ausführungsbeispiel gemäß Figur 1, wobei eine Glasfasermatte an der Innenseite der Unterdeckschicht angeordnet wird,
- Figur 3: das Ausführungsbeispiel gemäß Figur 1 oder Figur 2, wobei an der Innenseite der Unterdeckschicht und an der Innenseite der Oberdeckschicht jeweils eine Glasfasermatte angeordnet wird und
- Figur 4: eine schematische Ansicht eines Sandwich- Verbundelementes mit beispielhaft eingebrachten Glasfasermatten an jeder der Deckschicht- Innenseiten.

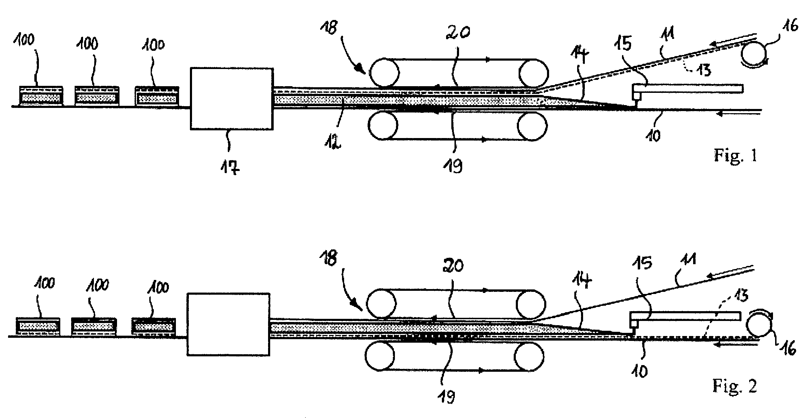

Figur 1 zeigt eine schematische Ansicht einer Anlage zum Betrieb eines Verfahrens, das zur Herstellung von Sandwich-Verbundelementen 100 gemäß einem ersten Ausführungsbeispiel der Erfindung dient. Das Verfahren wird mit einer Vorrichtung betrieben, die im Wesentlichen aus einer Doppelband-Transportanlage 18 besteht. Die Doppelband-Transportanlage 18 weist ein Untertransportband 19 und ein Obertransportband 20 auf, und die Transportbänder 19 und 20 rotieren in gezeigte Pfeilrichtung mit jeweils gleicher Geschwindigkeit. Zwischen den Transportbändern 19 und 20 erstreckt sich ein Spalt, und in den Spalt werden eine Unterdeckschicht 10 und eine Oberdeckschicht 11 eingezogen. Weiterhin wird eine Glasfasermatte 13 von einer Materialrolle 16 abgewickelt und in gezeigter Pfeilrichtung mit der Oberdeckschicht 11 zwischen die Transportbänder 19 und 20 eingezogen. Dabei wird die Glasfasermatte 13 derart unter Spannung gehalten, dass diese auf der Innenseite der Oberdeckschicht 11 anliegt.

Weiterhin gezeigt ist eine Gießharke 15, durch die ein aufschäumendes Reaktionsgemisch 14 auf der Innenseite der Unterdeckschicht 10 aufgetragen wird. Die Unterdeckschicht 10, die Oberdeckschicht 11 und die Glasfasermatte 13 laufen mit jeweils gleicher Geschwindigkeit in die Doppelband-Transportanlage 18 ein, wobei das aufschäumende Reaktionsgemisch 14 mit der Unterdeckschicht 10 ebenfalls mit in die Doppelband-Transportanlage 18 eingeführt wird.

Das im aufschäumen begriffene Reaktionsgemisch 14 gelang in Kontakt mit der Glasfasermatte 13 und durchtränkt diese. Dabei wird die Glasfasermatte 13 gegen die Innenseite der Oberdeckschicht 11 gedrückt und mit dieser verklebt. Das Durchtränken der Glasfasermatte 13 erfolgt durch eine entsprechende Spezifikation des Materials der Glasfasermatte 13 derart, dass die Glasfasermatte 13 mit dem aufschäumenden Reaktionsgemisch 14 gegen die Innenseite der Oberdeckschicht gedrückt wird, jedoch in der Weise, dass der Schaum und die Deckschicht trotz des Vorhandenseins der Glasfasermatte einen Stoffschluss bilden können. Während des Durchlaufens der Deckschichten 10 und 11 und des Reaktionsgemisches 14 durch die Doppelband-Transportanlage 18 härtet das Reaktionsgemisch 14 nach dem Aufschäumen und nach dem Verbinden mit dem Material der Glasfasermatte 13 zu einem Polyurethan-Hartschaumkernkörper 12 aus. Der Hartschaumkernkörper 12 kann aus einem PUR-Hartschaum oder einem PIR-Hartschaum bestehen. Nachdem das Sandwich-Verbundmaterial die Doppelband-Transportanlage 18 im Strang verlässt, wird diese beispielhaft einer Vereinzelungsanlage 17 zugeführt, um einzelne Sandwich-Verbundelemente 100 durch entsprechende Ablängung zu schaffen.

Figur 2 zeigt ein weiteres Ausführungsbeispiel zur Herstellung der Sandwich-Verbundelemente 100, und die Unterdeckschicht 10 und die Oberdeckschicht 11 werden auf gleiche Weise in die Doppelband-Transportanlage 18 mit dem Untertransportband 19 und dem Obertransportband 20 eingezogen. Das Ausführungsbeispiel zeigt die Anordnung einer Glasfasermatte 13 auf der Innenseite der Unterdeckschicht 10, wobei die Glasfasermatte 13 von einer Materialrolle 16 unter Aufrechterhaltung einer Vorspannung in Endlosrichtung abgewickelt wird. Dadurch wird die Glasfasermatte 13 bereits vor dem Auftragen des Reaktionsgemisches 14 durch die Gießharke 15 in Kontakt mit der Innenseite der Unterdeckschicht 10 gehalten.

Das aufschäumende Reaktionsgemisch 14 wird gemäß dem gezeigten Ausführungsbeispiel durch die Gießharke 15 auf die Glasfasermatte 13 aufgetragen, wobei das Reaktionsgemisch 14 bei Verlassen der Gießharke 15 ein im Wesentlichen flüssigen Zustand aufweist. Dabei durchtränkt das den Schaum bildende zunächst flüssige Reaktionsgemisch 14 die Glasfasermatte 13 und der Schaum verklebt mit der Glasfasermatte an der Innenseite der Unterdeckschicht. Anschließend kann das Reaktionsgemisch 14 aufschäumen und auch gegen die Innenseite der Oberdeckschicht 11 gelangen.

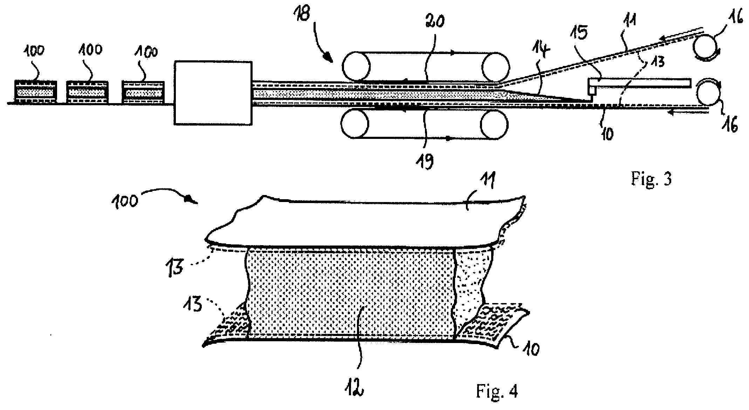

Figur 3 zeigt schließlich ein Ausführungsbeispiel mit zwei zugeführten Glasfasermatten 13. Eine erste Glasfasermatte 13 wird von einer ersten Materialrolle 16 abgewickelt und gegen die Innenseite der Unterdeckschicht 10 geführt. Auf gleiche Weise wird eine weitere Glasfasermatte 13 von einer weiteren Materialrolle 16 abgewickelt und gegen die Innenseite der Oberdeckschicht 11 geführt. Beide Deckschichten 10 und 11 laufen in die Doppelband-Transportanlage 18 zwischen das Untertransportband 19 und das Obertransportband 20 ein, und durch die Gießharke 15 wird das noch flüssige Reaktionsgemisch 14 auf die untere Glasfasermatte 13 aufgetragen. Diese durchtränkt zunächst die Glasfasermatte 13 und verklebt diese mit der Innenseite der Unterdeckschicht 10. Durch das gleichzeitige und/oder anschließende Aufschäumen des Reaktionsgemisches in Richtung zur Oberdeckschicht 11 gelangt das Reaktionsgemisch 14 mit der oberen Glasfasermatte 13 in Kontakt, und durchtränkt diese ebenfalls. Anschließend kann die Glasfasermatte 13 durch das Reaktionsgemisch 14 mit der Innenseite der Oberdeckschicht 11 verkleben. Im Ergebnis werden Sandwich-Verbundelemente 100 bereitgestellt, die angrenzend an jede der beiden Deckschichten 10 und 11 innenseitig jeweils eine Glasfasermatte 13 aufweisen. Ein derartiges Sandwich-Verbundelement 100 ist beispielhaft in Figur 4 gezeigt.

Figur 4 zeigt ein Ausführungsbeispiel eines Sandwich-Verbundelementes 100 in einer schematischen, perspektivischen Ansicht. Zwischen der Unterdeckschicht 10 und der Oberdeckschicht 11 befindet sich ein Polyurethan-Hartschaumkernkörper 12, wobei die Deckschichten 10 und 11 lediglich beispielhaft den Polyurethan-Hartschaumkernkörper 12 seitlich überlappen. Sowohl an der Innenseite der Unterdeckschicht 10 als auch an der Innenseite der Oberdeckschicht 11 ist beispielhaft eine Glasfasermatte 13 zur Bildung des erfindungsgemäßen Sandwich-Verbundelementes 100 gezeigt. Die Glasfasermatten 13 befinden sich unmittelbar angrenzend an die jeweilige Innenseite der Deckschicht 10 und 11, wobei die Glasfasermatten 13 einen direkten Kontakt der Innenseiten mit dem Polyurethan-Hartschaumkernkörper 12 nicht verhindert haben. Insbesondere wird trotz der Anordnung der Glasfasermatten 13 ein Verkleben des aufschäumenden Reaktionsgemisches 14 mit den Innenseiten der Deckschichten 10 und 11 nicht verhindert, wenngleich die Glasfasermatten 13 unmittelbar im Verbindungsbereich zwischen dem Hartschaumkernkörper 12 und den Deckschichten 10 und 11 angeordnet sind. Das gezeigte Ausführungsbeispiel des Sandwich-Verbundelementes 100 kann auch nur auf der Innenseite der Unterdeckschicht 10 oder nur auf der Innenseite der Oberdeckschicht 11 die gezeigte Glasfasermatte 13 aufweisen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 100: Sandwich-Verbundelement

- 10: Unterdeckschicht
- 11: Oberdeckschicht
- 12: Polyurethan- Hartschaumkernkörper
- 13: Glasfasermatte
- 14: aufschäumendes Reaktionsgemisch
- 15: Gießharke
- 16: Materialrolle
- 17: Vereinzelungsanlage
- 18: Doppelband-Transportanlage
- 19: Untertransportband
- 20: Obertransportband

## Patentansprüche

1. Verfahren zur kontinuierlichen Herstellung von Sandwich-Verbundelementen (100) mit einer Unterdeckschicht (10), einer Oberdeckschicht (11) und einem zwischen den Deckschichten (10, 11) eingebrachten Polyurethan- Hartschaumkernkörper (12), wobei
- eine Doppelband-Transportanlage (18) mit einem Untertransportband (19) und mit einem Obertransportband (20) vorgesehen ist und wobei
- die Unterdeckschicht (10) und die Oberdeckschicht (11) zwischen die Transportbänder (19, 20) kontinuierlich einlaufen, wobei
- wenigstens eine Glasfasermatte (13) kontinuierlich zwischen die Deckschichten (10, 11) einläuft und angrenzend an die Innenseite wenigstens einer der Deckschichten (10, 11) angeordnet wird und wobei
- auf wenigstens eine Innenseite der Deckschichten (10, 11) und/oder auf die Glasfasermatte (13) ein anschließend aufschäumendes Reaktionsgemisch (14) zur Bildung des Polyurethan- Hartschaumkernkörpers (12) aufgebracht wird,
wobei die Deckschichten (10, 11) aus einer Metallmaterialbahn bereitgestellt werden, insbesondere aus einem Metallmaterial aus der Gruppe der Stähle, der Edelstähle oder aus einem Aluminiummaterial oder dass die Deckschichten (10, 11) aus einer Kunststoffmaterialbahn insbesondere mit einer Beschichtung bereitgestellt werden.

2. Verfahren nach Anspruch 1, **dadurch gekennzeichnet, dass** das aufschäumende Reaktionsgemisch (14) zur Bildung des Polyurethan- Hartschaumkernkörpers (12) auf die Innenseite der Unterdeckschicht (10) mittels wenigstens einer Gießharke (15) oder über einen Mischkopf oder einen sich an den Mischkopf fluidisch anschließenden Verteilerkopf oder eine Anzahl von an den Verteilerkopf angeordnete Schläuche aufgebracht wird.

3. Verfahren nach Anspruch 1 oder 2, **dadurch gekennzeichnet, dass** eine Glasfasermatte (13) angrenzend an die Innenseite der Oberdeckschicht (11) zwischen die Deckschichten (10, 11) geführt wird.

4. Verfahren nach einem der Ansprüche 1 bis 3, **dadurch gekennzeichnet, dass** die Glasfasermatte (13) durch das im Aufsteigen begriffene aufschäumende Reaktionsgemisch (14) gegen die Innenseite der Oberdeckschicht (11) gedrückt und durch das aufschäumende Reaktionsgemisch (14) durchtränkt wird.

5. Verfahren nach einem der vorgenannten Ansprüche, **dadurch gekennzeichnet, dass** die Glasfasermatte (13) durch das im Aufsteigen begriffene aufschäumende Reaktionsgemisch (14) gegen die Innenseite der Oberdeckschicht (11) verklebt.

6. Verfahren nach einem der vorgenannten Ansprüche, **dadurch gekennzeichnet, dass** die Glasfasermatte (13) alternativ oder zusätzlich angrenzend an die Innenseite der Unterdeckschicht (10) zwischen die Deckschichten (10, 11) geführt wird, wobei das aufschäumende Reaktionsgemisch (14) auf die Glasfasermatte (13) aufgetragen wird.

7. Verfahren nach einem der vorgenannten Ansprüche, **dadurch gekennzeichnet, dass** die Glasfasermatte (13) als endlos- Glasfaser- Flächengebilde ausgebildet ist und ein Glasfilamentgewebe, ein Glasfaservlies, eine Textilglasfasermatte, eine Textilglas-Sandwichmatte und/oder eine gewebeverstärkte Glasmatte aufweist und insbesondere ein Flächengewicht von 100 bis 800 g/m², bevorzugt 150g/m² bis 300g/m², vorzugsweise von 200g/m² bis 250g/m² und besonders bevorzugt von 225g/m² aufweist und/oder insbesondere einen Erweichungspunkt von wenigstens 800°C und vorzugsweise von wenigstens 1000°C aufweist.

8. Verfahren nach einem der vorgenannten Ansprüche, **dadurch gekennzeichnet, dass** die Glasfasermatte (13) von einer Materialrolle (16) abgewickelt und unter Vorspannung in Endlosrichtung zwischen die Deckschichten (10, 11) geführt wird, wobei die Glasfasermatte (13) vorzugsweise durch die Vorspannung an der Innenseite der Unterdeckschicht (10) oder an der Innenseite der Oberdeckschicht (11) anliegt, insbesondere bevor die Glasfasermatte (13) mit dem aufschäumenden Reaktionsgemisch (14) in Kontakt gelangt.

9. Verfahren nach einem der vorgenannten Ansprüche, **dadurch gekennzeichnet, dass** das aufschäumende Reaktionsgemisch (14) wenigstens aus den zusammengeführten Mischkomponenten Isocyanat und Polyol ausgebildet ist und wobei der Polyurethan-Hartschaumkernkörper (12) ein PUR- und/oder ein PIR- Hartschaummaterial umfasst und wobei dem Reaktionsgemisch (14) Flammschutzmittel, insbesondere brom- und chlorhaltige Polyole oder Phosphorverbindungen wie Ester der Orthophosphorsäure und der Metaphosphorsäure, insbesondere enthaltend Halogen, zugesetzt sind.

10. Verfahren nach einem der vorgenannten Ansprüche, **dadurch gekennzeichnet, dass** die Transportgeschwindigkeit der Doppelband-Transportanlage einen Wert aufweist, bei dem das einen Schaum bildende aufschäumende Reaktionsgemisch (14) mit der Glasfasermatte (13) während des Durchlaufes zwischen den Transportbändern (19, 20) an der Deckschicht (10, 11) verklebt.

11. Sandwich-Verbundelement (100) hergestellt mit einem Verfahren nach einem der Ansprüche 1 bis 10 mit einer Unterdeckschicht (10), einer Oberdeckschicht (11) und einem zwischen den Deckschichten (10, 11) eingebrachten Polyurethan-Hartschaumkernkörper (12), wobei angrenzend an wenigstens eine Innenseite der Deckschichten (10, 11) eine Glasfasermatte (13) angeordnet ist.

## Claims

1. Process for the continuous production of sandwich composite elements (100) with a lower outer layer (10), an upper outer layer (11), and a rigid polyurethane foam core (12) introduced between the outer layers (10, 11), where
- a twin-belt transport system (18) has been provided with a lower transport belt (19) and with an upper transport belt (20), and where
- the lower outer layer (10) and the upper outer layer (11) are continuously introduced between the transport belts (19, 20), where
- at least one glassfiber mat (13) is introduced continuously between the outer layers (10, 11), and is arranged adjacently to the inner side of at least one of the outer layers (10, 11), and where
- in order to form the rigid polyurethane foam core (12), a reaction mixture (14) that subsequently foams is applied to at least one inner side of the outer layers (10, 11) and/or to the glassfiber mat (13), where the outer layers (10, 11) are provided from a metal web, in particular made of a metal material from the group of the stainless steels or other steels, or from an aluminum material, or in that the outer layers (10, 11) are provided from a plastics web which in particular has a coating.

2. Process according to Claim 1, **characterized in that**, in order to form the rigid polyurethane foam core (12), the foaming reaction mixture (14) is applied to the inner side of the lower outer layer (10) by means of at least one rake applicator (15) or by way of a mixing head, or a distributor head having fluid connection to the mixing head, or a number of hoses arranged onto the distributor head.

3. Process according to Claim 1 or 2, **characterized in that** a glassfiber mat (13) is conducted between the outer layers (10, 11) adjacently to the inner side of the upper outer layer (11).

4. Process according to any of Claims 1 to 3, **characterized in that** the glassfiber mat (13) is forced against the inner side of the upper outer layer (11) by the rise of the foaming reaction mixture (14), and is saturated by the foaming reaction mixture (14).

5. Process according to any of the preceding claims, **characterized in that** the glassfiber mat (13) is adhesively bonded to the inner side of the upper outer layer (11) by the rise of the foaming reaction mixture (14).

6. Process according to any of the preceding claims, **characterized in that** the glassfiber mat (13) is alternatively or additionally conducted between the outer layers (10, 11) adjacently to the inner side of the lower outer layer (10), where the foaming reaction mixture (14) is applied to the glassfiber mat (13).

7. Process according to any of the preceding claims, **characterized in that** the glassfiber mat (13) is a continuous glassfiber sheet and comprises a woven glass-filament fabric, a glassfiber nonwoven, a textile glassfiber mat, a textile glass-sandwich mat, and/or a woven-fabric-reinforced glass mat, and in particular has a weight per unit area of from 100 to 800 g/m², preferably from 150 g/m² to 300 g/m², with preference from 200 g/m² to 250 g/m², and with particular preference 225 g/m², and/or in particular has a softening point of at least 800°C and preferably of at least 1000°C.

8. Process according to any of the preceding claims, **characterized in that** the glassfiber mat (13) is unwound from a roll (16) of material and, with pretensioning, is conducted in continuous direction between the outer layers (10, 11), where the glassfiber mat (13) is preferably, by virtue of the pretensioning, in contact with the inner side of the lower outer layer (10) or with the inner side of the upper outer layer (11), in particular before the glassfiber mat (13) comes into contact with the foaming reaction mixture (14).

9. Process according to any of the preceding claims, **characterized in that** the foaming reaction mixture (14) is composed at least of the combined mixture components isocyanate and polyol, where the rigid polyurethane foam core (12) comprises a rigid PUR foam material and/or a rigid PIR foam material, and where flame retardants, in particular bromine-and chlorine-containing polyols or phosphorus compounds, such as esters of orthophosphoric acid and of metaphosphoric acid, in particular comprising halogen, have been added to the reaction mixture (14).

10. Process according to any of the preceding claims, **characterized in that** the transport velocity of the twin-belt transport system has a value such that when the foaming reaction mixture (14) forms a foam it bonds adhesively, with the glassfiber mat (13), to the outer layer (10, 11) during passage between the transport belts (19, 20).

11. Sandwich composite element (100) produced by a process according to any of Claims 1 to 10 with a lower outer layer (10), an upper outer layer (11), and a rigid polyurethane foam core (12) introduced between the outer layers (10, 11), where there is a glassfiber mat (13) arranged adjacently to at least one inner side of the outer layers (10, 11).

## Revendications

1. Procédé de fabrication continue d'éléments composites en sandwich (100) comprenant une couche de surface inférieure (10), une couche de surface supérieure (11) et un corps de noyau en mousse dure de polyuréthane (12) introduit entre les couches de surface (10, 11),
- une unité de transport à double bande (18) comprenant une bande de transport inférieure (19) et une bande de transport supérieure (20) étant prévue, et
- la couche de surface inférieure (10) et la couche de surface supérieure (11) se déplaçant en continu entre les bandes de transport (19, 20),
- au moins un mat de fibres de verre (13) se déplaçant en continu entre les couches de surface (10, 11) et étant agencé adjacent au côté intérieur d'au moins une des couches de surface (10, 11), et
- un mélange réactionnel (14) moussant par la suite pour la formation du corps de noyau en mousse dure de polyuréthane (12) étant appliqué sur au moins un côté intérieur des couches de surface (10, 11) et/ou sur le mat de fibres de verre (13),
les couches de surface (10, 11) étant préparées en une bande de matériau métallique, notamment en un matériau métallique du groupe constitué par les aciers, les aciers inoxydables ou en un matériau d'aluminium, ou les couches de surface (10, 11) étant préparées en une bande de matériau en plastique, notamment munie d'un revêtement.

2. Procédé selon la revendication 1, **caractérisé en ce que** le mélange réactionnel moussant (14) pour la formation du corps de noyau en mousse dure de polyuréthane (12) est appliqué sur le côté intérieur de la couche de surface inférieure (10) au moyen d'au moins un râteau de coulage (15) ou par une tête de mélange ou une tête de distribution raccordée fluidiquement à la tête de mélange ou un certain nombre de tuyaux agencés sur la tête de distribution.

3. Procédé selon la revendication 1 ou 2, **caractérisé en ce qu'**un mat de fibres de verre (13) est conduit adjacent au côté intérieur de la couche de surface supérieure (11) entre les couches de surface (10, 11).

4. Procédé selon l'une quelconque des revendications 1 à 3, **caractérisé en ce que** le mat de fibres de verre (13) est poussé par le mélange réactionnel moussant (14) ascendant contre le côté intérieur de la couche de surface supérieure (11) et est imprégné par le mélange réactionnel moussant (14).

5. Procédé selon l'une quelconque des revendications précédentes, **caractérisé en ce que** le mat de fibres de verre (13) est collé contre le côté intérieur de la couche de surface supérieure (11) par le mélange réactionnel moussant (14) ascendant.

6. Procédé selon l'une quelconque des revendications précédentes, **caractérisé en ce que** le mat de fibres de verre (13) est conduit en alternative ou en plus adjacent au côté intérieur de la couche de surface inférieure (10) entre les couches de surface (10, 11), le mélange réactionnel moussant (14) étant appliqué sur le mat de fibres de verre (13).

7. Procédé selon l'une quelconque des revendications précédentes, **caractérisé en ce que** le mat de fibres de verre (13) est configuré sous la forme d'une structure plate en fibres de verre continues et comprend un tissu de filaments de verre, un non-tissé de fibres de verre, un mat de fibres de verre textile, un mat en sandwich de verre textile et/ou un mat de verre renforcé par un tissu, et présente notamment un poids superficiel de 100 à 800 g/m², de préférence de 150 g/m² à 300 g/m², avantageusement de 200 g/m² à 250 g/m² et de manière particulièrement préférée de 225 g/m², et/ou présente notamment un point de ramollissement d'au moins 800 °C et de préférence d'au moins 1 000 °C.

8. Procédé selon l'une quelconque des revendications précédentes, **caractérisé en ce que** le mat de fibres de verre (13) est déroulé à partir d'un rouleau de matériau (16) et conduit sous une pré-tension dans la direction continue entre les couches de surface (10, 11), le mat de fibres de verre (13) étant de préférence ajusté par la pré-tension sur le côté intérieur de la couche de surface inférieure (10) ou le côté intérieur de la couche de surface supérieure (11), notamment avant que le mat de fibres de verre (13) n'entre en contact avec le mélange réactionnel moussant (14).

9. Procédé selon l'une quelconque des revendications précédentes, **caractérisé en ce que** le mélange réactionnel moussant (14) est formé au moins par les composants de mélange réunis isocyanate et polyol, le corps de noyau en mousse dure de polyuréthane (12) comprenant un matériau en mousse dure de PUR et/ou PIR, et des agents ignifuges, notamment des polyols bromés et chlorés ou des composés de phosphore tels que des esters de l'acide orthophosphorique et de l'acide métaphosphorique, notamment contenant des halogènes, étant ajoutés au mélange réactionnel (14).

10. Procédé selon l'une quelconque des revendications précédentes, **caractérisé en ce que** la vitesse de transport de l'unité de transport à double bande présente une valeur à laquelle le mélange réactionnel moussant formant une mousse (14) est collé avec le mat de fibres de verre (13) pendant le passage entre les bandes de transport (19, 20) sur la couche de surface (10, 11).

11. Élément composite en sandwich (100) fabriqué par un procédé selon l'une quelconque des revendications 1 à 10, comprenant une couche de surface inférieure (10), une couche de surface supérieure (11) et un corps de noyau en mousse dure de polyuréthane (12) introduit entre les couches de surface (10, 11), un mat de fibres de verre (13) étant agencé adjacent à au moins un côté intérieur des couches de surface (10, 11).
